(19) Europäisches Patentamt
European Patent Office
Office européen des brevets

(11) Veröffentlichungsnummer : **0 021 213**
**B2**

(12) # NEUE EUROPÄISCHE PATENTSCHRIFT

(45) Veröffentlichungstag der neuen Patentschrift : **23.12.87**

(51) Int. Cl.⁴ : **C 08 G 79/04**, C 08 G 63/68

(21) Anmeldenummer : **80103190.7**

(22) Anmeldetag : **09.06.80**

(54) **Aromatische Polyesterphosphonate und ihre Verwendung zur Herstellung thermoplastischer Formkörper.**

(30) Priorität : **22.06.79 DE 2925206**

(43) Veröffentlichungstag der Anmeldung : **07.01.81 Patentblatt 81/01**

(45) Bekanntmachung des Hinweises auf die Patenterteilung : **14.09.83 Patentblatt 83/37**

(45) Bekanntmachung des Hinweises auf die Entscheidung über den Einspruch : **23.12.87 Patentblatt 87/52**

(84) Benannte Vertragsstaaten :
**DE FR GB IT NL**

(56) Entgegenhaltungen :
**DE-B- 1 199 500**
**GB-A- 924 607**
**US-A- 2 682 522**
**US-A- 2 716 101**
**US-A- 3 267 075**
**Sander (et al). J. Macromol. Sci., Vol. C1, No.1, 1967, Seiten 109, 120**
**Korshak und Vinogradova: "Polyesters" (1965), Seiten 448-453**
**Encycl. of Polymer Sci and Techn., Vol. II (1969), Seiten 522-526**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Schmidt, Manfred, Dr.**
**c/o Mobay Chemical Corporation**
**New Martinsville, West Virginia 26155 (US)**
Erfinder : **Freitag, Dieter, Dr.**
**Hasenheide 10**
**D-4150 Krefeld 1 (DE)**
Erfinder : **Bottenbruch, Ludwig, Dr.**
**Wöhlerstrasse 5**
**D-4150 Krefeld (DE)**
Erfinder : **Reinking, Klaus, Dr.**
**Robert-Stolz-Strasse 16 B**
**D-5632 Wermelskirchen (DE)**
Erfinder : **Röhr, Harry, Dr.**
**Zur Ville 21**
**D-5020 Frechen (DE)**
Erfinder : **Medem, Harald, Dr.**
**Buschstrasse 167**
**D-4150 Krefeld (DE)**

**EP 0 021 213 B2**

Jouve, 18, rue St-Denis, 75001 Paris, France

**Beschreibung**

Die Erfindung betrifft aromatische Polyesterphosphonate mit mittleren Molekulargewichten $\bar{M}_n$ von 11 000 bis über 200 000 sowie ihre Verwendung zur Herstellung thermoplastischer Formkörper.

Polyphosphonate sind bekannt (DE-AS 1 569 340, DE-OS 2 458 967, 2 461 658, US 2 682 522, 2 716 101, 2 891 915, 3 719 727, 3 919 363, 3 946 093, 4 046 724). Sie zeichnen sich durch hohe Flammwidrigkeit und hervorragende Zähigkeit aus, sind jedoch relativ wenig wärmeformbeständig, was ihrer Verwendung zur Herstellung hochtemperaturbeständiger Formkörper im Wege steht.

Überraschenderweise wurde nun gefunden, daß neue Cokondensate, die sowohl Phosphonatgruppen als auch Estereinheiten aromatischer Dicarbonsäuren und aromatischer Dihydroxiverbindungen enthalten, eine gegenüber den bekannten Polyphosphonaten kaum geminderte Flammwidrigkeit, dabei aber verbesserte mechanische Eigenschaften, insbesondere eine in unerwartet hohem Maß gesteigerte Wärmeformbeständigkeit aufweisen. Umgekehrt wird durch die Phosphonatgruppen die als Nachteil aromatischer Polyester bekannte geringe Fließfähigkeit soweit erhöht, daß sich die erfindungsgemäßen Cokondensate weitaus leichter als hochmolekulare aromatische Polyester verarbeiten lassen. Es ist selbstverständlich, daß die geschilderten Effekte mit seigendem Anteil der Estereinheiten variieren.

Ähnliche Polyesterphosphonate sind aus DE-AS 1 199 500 bekannt. Diese werden durch Umsetzung von Alkalibisphenolaten mit Disäurehalogeniden in Gegenwart von Phenylphosphonsäuredichlorid hergestellt. Sie enthalten mindestens teilweise Säurechlorid-Endgruppen und haben ein niedrigeres Molekulargewicht und eine geringere Thermostabilität.

Gegenstand der Erfindung sind also halogenfreie Polyesterphosphonate mit einem mittleren Molekulargewicht $\bar{M}_n$ von 11 000 bis 200 000, vorzugsweise 12 000 bis 80 000, dadurch gekennzeichnet, daß sie

A. 5-95, vorzugsweise 10-60 Mol-% wiederkehrende Einheiten der Struktur

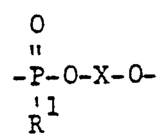

B. 95-5, vorzugsweise 90-40 Mol-% wiederkehrende Einheiten der Struktur

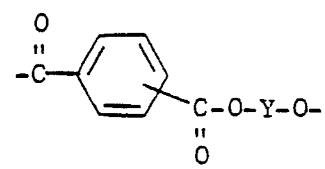

wobei sich die Molprozente A + B auf 100 ergänzen, und

C. an Phosphor gebundene Endgruppen

—O—X—O—E ou 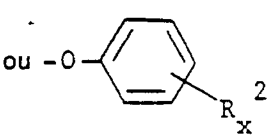

und an Sauerstoff gebundene Endgruppen

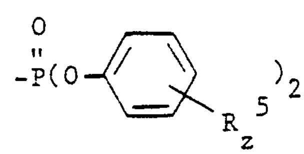

oder E enthalten, wobei X, Y

Phenylen 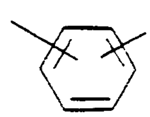

Biphenylylen 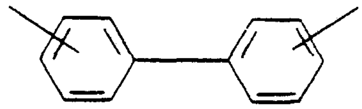

$C_1$-$C_4$-Alkylenbisphenylen 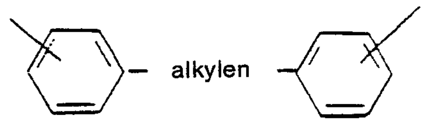

$C_5$-$C_{12}$-Cycloalkylenbisphenylen 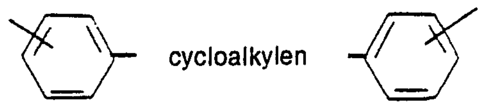

Thiobisphenylen 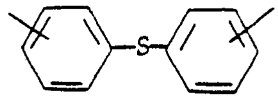

Oxibisphenylen 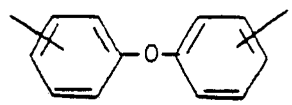

Sulfonylbisphenylen 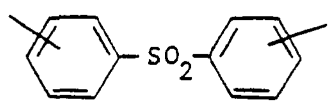

Carbonylbisphenylen 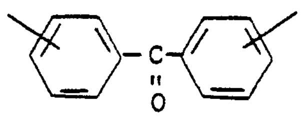

Naphthylen 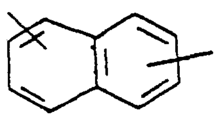 ,

wobei jeder Phenylkern unsubstituiert oder durch 1-4 $C_1$-$C_4$-Alkyltruppen substituiert sein kann und der Naphthylenkern unsubstituiert oder durch 1-6 der genannten Gruppen substituiert sein kann.

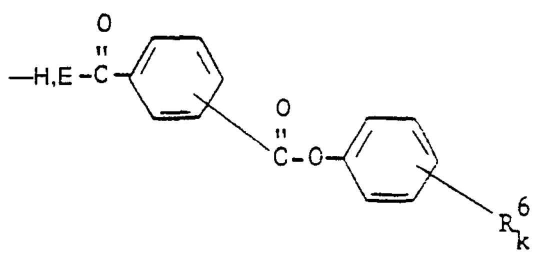 oder 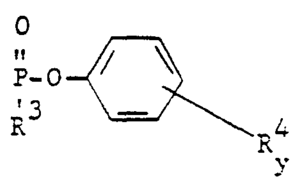 ,

$R^1$, $R^3$ Alkylreste mit 1-12 C-Atomen, Alkenylreste mit 2-12 C-Atomen, Cycloalkyl-, Cycloalkenyl-, Aryl-, Aralkyl- oder Aralkenylreste mit 6-30 C-Atomen, wobei die jeweilige Arylgruppe unsubstituiert oder durch 1-5 $C_1$-$C_4$-Alkylreste substituiert sein kann,

$R^2$, $R^4$, $R^5$, $R^6$ $C_1$-$C_4$-Alkylgruppen und k, x, y, z Null oder eine ganze Zahl von 1 bis 5 bedeuten.

Vorzugsweise haben vorstehende Definitionen folgende Bedeutung :

$R^1$, $R^3$ Methyl oder Phenyl, insbesondere Methyl, Phenylen, Bisphenylylen,

X, Y $C_1$-$C_4$-Alkylenbisphenyle, wobei jeder Phenylkern durch 1 bis 4 Methylgruppen substituiert sein kann, Cyclohexylenbisphenylen, Oxibisphenylen, Thiobisphenylen, Sulfonylbisphenylen, insbesondere

$C_1$-$C_4$-Alkylenbisphenylen, wobei jeder Phenylkern durch ein oder zwei Methylgruppen substituiert sein kann,

$R^2$, $R^4$, $R^5$, $R^6$ $C_1$-$C_4$-Alkylgruppen und

k, x, y, z Null.

Die mittleren Molekulargewichte von 11 000 bis 200 000, vorzugsweise 12 000 bis 80 000 — die Bestimmung erfolgt membranosmometrisch an bis $\bar{M}_n = 3\,000$ undurchlässigen Membranen (gelchromatographisch war festgestellt worden, daß die Cokondensate, keine Anteile mit $\bar{M}_n < 3\,000$ enthielten) — entsprechen etwa relativen Viskositäten von 1,20 bis über 2,0, vorzugsweise 1,24 bis 1,40 (gemessen in 0,5 gew.-%iger Lösung in Methylenchlorid bei 25 °C).

Die erfindungsgemäßen Polyesterphosphonate können durch Umesterung hergestellt werden indem man

I. 5-95 Mol, vorzugsweise 40-90 Mol, mindestens eines Iso- und/oder Terephthalsäurediarylesters,

II. 95-5 Mol, vorzugsweise 60-10 Mol, mindestens eines Phosphonsäurediarylesters, wobei die Summe I + II 100 Mol beträgt, mit

III. 91-99 Mol, vorzugsweise 93-97 Mol, mindestens einer aromatischen Dihydroxiverbindung in Gegenwart von $10^{-7}$ bis $2 \cdot 10^{-4}$, vorzugsweise $7 \cdot 10^{-6}$ bis $2 \cdot 10^{-5}$, Mol, bezogen auf 1 Mol III, basischer Umesterungskatalysatoren in der Schmelze bei 80 bis 340, vorzugsweise 100 bis 320 °C und vermindertem Druck unter Abspaltung der flüchtigen Mono-Hydroxiaryle umsetzt, bis der gewünschte Kondensationsgrad erreicht ist.

Bevorzugte Iso- und/oder Terephthalsäurediarylester I entsprechen der Formel

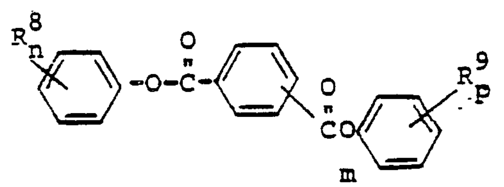

worin

$R^8$, $R^9$ $C_1$-$C_4$-Alkylgruppen und

n, p eine ganze Zahl von 1 bis 5, vorzugsweise aber Null, bedeuten.

Besonders bevorzugte Diarylester I sind Iso- und Terephthalsäurediphenylester. Bevorzugte Mischungsverhältnisse bewegen sich von 10 : 1 bis 1 : 10.

Bevorzugte Phosphonsäurediarylester II entsprechen der Formel

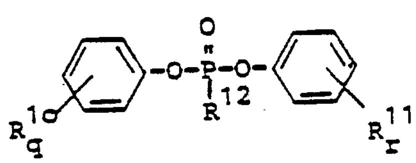

worin

$R^{10}$, $R^{11}$ die oben für $R^2$ bzw. $R^4$-$R^6$,

q, r die oben für k, x, y bzw. z,

$R^{12}$ die oben für $R^1$ bzw. $R^3$ angegebene Bedeutung haben.

Besonders bevorzugte Phosphonsäurediarylester II sind halogenfreie Alkyl- und Arylphosphonsäurediphenylester, insbesondere Methyl- und Phenylphosphonsäurediphenylester.

Bevorzugte aromatische Dihydroxiverbindungen III besitzen die Strukturen

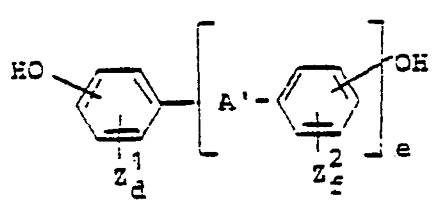

oder

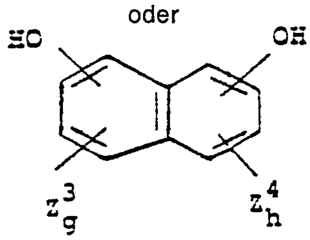

in denen

A' eine Einfachbindung, eine Alkylengruppe mit 1 bis 4 C-Atomen, eine Cycloalkylengruppe mit 5 oder 6 C-Atomen, eine Sulfonylgruppe, eine Carbonylgruppe, ein Sauerstoff- oder Schwefelatom,

e Null oder 1,

$Z^1$, $Z^2$, $Z^3$, $Z^4$ oder $C_1$-$C_4$ Alkyl bedeuten,

d, f Null oder ganze Zahlen von 1 bis 4,

g, h Null oder ganze Zahlen von 1 bis 3 bedeuten.

Besonders bevorzugte aromatische Dihydroxiverbindungen III sind Hydrochinon, 4,4'-Dihydroxidiphenylether, Bis-(4-hydroxiphenyl)-alkane und -cycloalkane wie 2,2-Bis-(4-hydroxiphenyl)-methan, 2,2-Bis-(3,5-dimethyl-4-hydroxiphenyl)-propan, insbesondere aber 4,4'-Dihydroxidiphenyl, 4,4'-Sulfonyldiphenol, 1,1-Bis-4-hydroxiphenyl)-cyclohexan, 4,4'-Dihydroxidiphenylsulfid und 2,2-Bis-(4-hydroxiphenyl)-propan.

Die erfindungsgemäßen Polyesterphosphonate können durch Einbau geringer Mengen mehr als zweiwertiger Verbindungen, vorzugsweise 0,05 bis 3 Mol-%, bezogen auf aromatische Dihydroxiverbindungen III, d. h. Verbindungen mit mehr als zwei phenolischen Hydroxylgruppen, oder von 0,05 bis 3 Mol-%, bezogen auf Iso- bzw. Terephthalsäurediarylester I, an Triarylphosphaten oder Arylestern mehr als zweibasischer Carbonsäuren, verzweigt sein.

Bevorzugte verzweigende Verbindungen mit mehr als zwei Hydroxylgruppen sind Phloroglucin, 4,6-Dimethyl-2,4,6-tri-(4-hydroxiphenyl)-hepten-2, 4,6-Dimethyl-2,4,6-tri-(4-hydroxiphenyl)-heptan, 1,3,5-Tri-(4-hydroxiphenyl)-benzol, 1,1,1-Tri-(4-hydroxiphenyl)-ethan, Tri-(4-hydroxiphenyl)-phenyl-methan, 2,2-Bis-[4,4-bis-(4-hydroxiphenyl)-cyclohexyl]-propan, 2,4-Bis-(4-hydroxiphenyl)-isopropylphenol,2,6-Bis-(2'-hydroxi-5'-methyl-benzyl)-4-methylphenol, 2-(4-Hydroxiphenyl)-2-(2,4-dihydroxiphenyl)-propan, Tetra-(4-hydroxiphenyl)-methan, Tetra-[4-hydroxiphenylisopropyl)-phenoxi]-methan und 1,4-Bis-(4,4''-dihydroxitriphenyl-methyl)-benzol oder deren Mischungen.

Als Verzweigungsmittel bevorzugte Triarylphosphate entsprechen der Formel

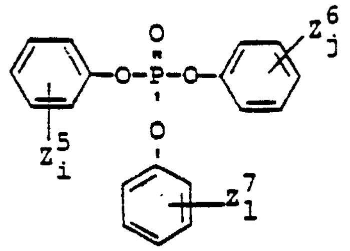

worin

$Z^5$, $Z^6$, $Z^7$ die oben für $Z^1$-$Z^4$ und

i, j, l die oben für d. f. g bzw. h

angegebene Bedeutung haben. Besonders bevorzugt ist Triphenylphosphat.

Als Verzweigungsmittel bevorzugte Arylester mehr als zweibasischer Carbonsäuren sind die Triarylester von Tricarbonsäuren wie Trimesinsäure und die Tetraarylester von Tetracarbonsäuren wie Pyromellithsäure zu nennen.

Bevorzugte basische Umesterungskatalysatoren sind Alkoholate der Alkali- und Erdalkalimetalle wie Natriummethylat oder Calciumethylat, Natrium-, Kalium- oder Lithiumphenolate von monofunktionellen Phenolen, Natrium-, Kalium- oder Lithiumsalze der aromatischen Dihydroxiverbindungen III der obigen Formeln, Hybride der Alkali- oder Erdalkalimetalle wie Lithiumhydrid, Natriumborhydrid oder Calciumhydrid, Oxide der Alkali- und Erdalkalimetalle wie Lithiumoxid, Natriumoxid oder Bariumoxid,

Amide der Alkali- und Erdalkalimetalle wie Natriumamid oder Calciumamid sowie basisch reagierende Salze der Alkali- oder Erdalkalimetalle mit organischen oder anorganischen Säuren wie Natriumacetat, Natriumbenzoat oder Natriumcarbonat.

Ebenfalls geeignet ist Imidazol. Auch Gemische der obengenannten Katalysatoren können verwendet werden. Bevorzugt werden jedoch monofunktionelle Alkalimetallphenolate, wie Natriumphenolat, verwendet.

Alle für die Umesterung eingesetzten Ausgangsmaterialien sollen Reinheitsgrade von $>$ 99,1 % vorzugsweise $>$ 99,7 %, besitzen.

Zur Durchführung des erfindungsgemäßen Verfahrens werden Iso- und/oder Terephthalsäurediarylester I sowie die Phosphonsäurediarylester II und gegebenenfalls Verzweigungsmittel mit den aromatischen Dihydroxiverbindungen III in Anwesenheit von Umesterungskatalysatoren in sauerstoff-freier Atmosphäre, d. h. in Gegenwart eines Inertgases, wie z. B. Stickstoff, zur Reaktion gebracht.

Durch Zugabe einer basenbindenden Substanz wie beispielsweise Dimethylsulfat oder Diethylsulfat, kann der basische Umesterungskatalysator gegen Reaktionsende in der Cokondensatschmelze neutralisiert werden. Die gebildeten flüchtigen Neutralisationsprodukte können durch Abdestillieren im Vakuum aus der Schmelze entfernt werden. Nach Neutralisation des Katalysators kann die Umesterung noch in begrenztem Maße zur Erreichung eines gewünschten höheren Molekulargewichts weitergeführt werden.

Nach Beendigung der Reaktion wird die gebildete Schmelze des Polyesterphosphonats in üblicher

Weise in Granulate oder direkt in geformte Gebilde wie Filme, Fasern oder Borsten übergeführt. Die so erhaltenen Polyesterphosphonate lassen sich im Schmelzfluß durch technisch gebräuchliche Verarbeitungsaggregate wie Extruder und Spritzgußmaschinen zu Formkörpern extremer Flammwidrigkeit und hoher Wärmeformbeständigkeit verarbeiten. Weitere wertvolle Eigenschaften der erfindungsgemäßen Polyesterphosphonate sind ihre ausgezeichneten mechanischen Eigenschaften, wie beispielsweise ihre hohe Zähigkeit und Zugfestigkeit.

Die erfindungsgemäßen Polyesterphosphonate sind löslich in Methylenchlorid 1,1,2,2-Tetrachlorethan, Trichlorethylen, Chloroform, Chlorbenzol, 1,2-Dichlorbenzol, Dioxan und Hexamethylenphosphorsäuretriamid, mit Ausnahme der Polyesterphosphonate mit X bzw. Y = Thiobisphenylen (in Struktur A bzw. B ; vgl. S 2 bzw. S. 3).

Den Polyesterphosphonaten können antistatische Mittel, Pigmente, Formtrennmittel, thermische Stabilisatoren, UV-Stabilisatoren, Füllstoffe wie beispielsweise Talkum, Mineralwolle, Glimmer, Calciumcarbonat, Dolomit, sowie verstärkende Füllstoffe wie beispielsweise Glasfasern, Glaskugeln und Asbest zugemischt werden.

Die erfindungsgemäßen thermoplastischen, aromatischen, vorzugsweise halogenfreien Polyesterphosphonate können überall dort Anwendung finden, wo thermoplastische Chemiewerkstoffe höchster Brandwidrigkeit benötigt werden und wo zusätzlich bei Einwirkung sehr hoher Temperaturen eine Entwicklung toxischer Pyrolysegase vermieden werden soll. Derartige Anwendungsgebiete finden sich beispielsweise im Fahrzeugbau, im Flugzeugbau, auf dem Raumfahrtsektor oder auf dem Gebiet der Sicherheitstechnik. Ein weiterer Gegenstand der Erfindung ist also die Verwendung der erfindungsgemäßen Polyesterphosphonate zur Herstellung thermoplastischer Formkörper.

Die nach dem oben beschriebenen erfindungsgemäßen Verfahren erhaltenen thermoplastischen, aromatischen Polyesterphosphonate wurden bei 280° bis 330 °C extrudiert und zu Prüfkörpern ausgeformt.

Die Prüfung des Verhaltens bei Schlagbeanspruchung erfolgte sowohl durch Messung der Schlagzähigkeit nach Charpy $a_n$ gemäß DIN 53 453 oder ASTM D 256 als auch durch Messung der Kerbschlagzähigkeit nach Charpy $a_k$ gemäß DIN 53 453 oder ASTM D 256. Die Messung der Härte erfolgte durch Messung der Kugeldruckhärte HK gemäß DIN 53 456. Die Prüfung der mechanisch-elastischen Eigenschaften erfolgte durch Spannungs-Verformungsversuche wie durch Messung des Biege-E-Moduls gemäß DIN 53 457, durch Messung der Biegefestigkeit $\sigma_B$, durch Messung des Zug-E-Moduls gemäß DIN 53 457, durch Messung der Reißfestigkeit $\sigma_R$, der Reißdehnung $\varepsilon_R$, der Streckfestigkeit $\sigma_S$ und der Streckdehnung $\varepsilon_S$ gemäß DIN 53 455 (1968) oder ASTM D 638.

Die Prüfung der Wärmeformbeständigkeit erfolgte durch Messung des Vicat-Erweichungspunktes VSP gemäß DIN 53 460 oder ISO/R 306.

Die Prüfung des Brandverhaltens erfolgte sowohl durch Messung des $O_2$-Index gemäß ASTM D 2863-70 als auch durch Messung der Nachbrennzeit gemäß dem UL-Test (Subj. 94).

Hierbei werden im Spritzgußverfahren bei 300-310 °C Teststäbe mit den Abmessungen :

127 × 12,7 × 1,6 mm (1/16") und

127 × 12,7 × 3,2 mm (1/8") ausgeformt.

Die Teststäbe wurden dem Testverfahren gemäß Underwriters Laboratories, Inc. Bulletin 94, Verbrennungstest zur Klassifizierung von Materialien, unterworfen.

Gemäß diesem Testverfahren wurden die so geprüften Materialien entweder mit UL-94 V-O, UL-94 V-I und UL-94 V-II klassifiziert, und zwar auf der Basis der mit den 10 Proben erhaltenen Ergebnisse. Die Kriterien für jede dieser V-Klassifizierung gemäß UL-94 sind kurz wie folgt :

UL-94 V-O Das durchschnittliche Flammen und/oder Glühen nach Entfernung der Zündflamme soll 5 Sekunden nicht überschreiten und keine der Proben soll Teilchen abtropfen lassen, die absorbierende Baumwolle entzünden.

UL-94 V-I Das durchschnittliche Flammen und/oder Glühen nach Entfernung der Zündflamme soll 25 Sekunden nicht überschreiten und keine der Proben soll Teilchen abtropfen lassen, die absorbierende Baumwolle entzünden.

UL-94 V-II Das durchschnittliche Flammen und/oder Glühen nach Entfernung der Zündflamme soll 25 Sekunden nicht überschreiten und die Proben lassen flammende Teilchen abtropfen, welche absorbierende Baumwolle entzünden.

Weiterhin wurde ein Teststab, der mehr als 25 Sekunden nach Entfernung der Zündflamme brannte, nicht nach UL-94 klassifiziert, sondern nach den Standardbedingungen der vorliegenden Erfindung als «brennt» bezeichnet. Die Vorschrift UL-94 erfordert weiterhin daß alle Teststäbe eines Versuchs die jeweilige V-Bewertung erfüllen müssen, anderenfalls erhalten die 10 Teststäbe die Bewertung des schlechtesten Einzelstabes. Wenn beispielsweise 1 Stab mit UL-94 V-II bewertet wird und die anderen 9 Teststäbe mit UL-94 V-O bewertet werden, dann erhalten alle 10 Stäbe die Bewertung UL-94 V-II.

Bei den in den nachfolgenden Beispielen aufgeführten Prozentangaben handelt es sich um Gewichtsprozente, sofern es sich nicht um die Meßwerte der mechanischen Eigenschaften der Polyesterphosphonate geht.

Beispiel 1

5 140 g (16,16 Mol) Iso-/Terephthalsäurediphenylestergemisch (1 : 1),
1 333 g (5,375 Mol) Methylphosphonsäurediphenylester,
4 869 g (21,36 Mol) Bisphenol A,
2,26 g ($0,715 \cdot 10^{-2}$ Mol) Triphenylphosphat und
0,32 g ($2,76 \cdot 10^{-3}$ Mol) Natriumphenolat

werden unter Stickstoff bei 250 °C intensiv verrührt. Anschließend wird innerhalb von 5 Std. bei einer von 250° auf 280 °C ansteigenden Temperatur und einem von 250 mbar auf 10 mbar allmählich absinkenden Druck über eine 100 °C beheizte Kolonne Phenol abdestilliert. Die Reaktion wird anschließend 1 1/2 Std. bei 290 bis 310 °C und bei einem Druck von 0,3 mbar fortgesetzt, wobei die Umdrehungszahl des Rührers auf einem konstanten Wert absinkt. Nach Belüften des Rührautoklaven mit Stickstoff läßt man das Polyesterphosphonat bei 300 °C unter Stillstand des Rührers 1 Std. sich absetzen und isoliert das Cokondensat anschließend durch Abspinnen unter Druck (ca. 10 bar) und Granulieren des Schmelzstranges. Man erhält 5 kg eines amorphen Polyesterphosphonats, in dem Iso-Terephthalat- und Phosphonat-Einheiten im molaren Verhältnis 3 : 1 vorliegen.

Analytische Daten :

mittleres Gewichtsmittel-Molekulargewicht : $\bar{M}_n$ = 24 600, relative Lösungsviskosität $\eta_{rel}$ = 1,314 (gemessen bei 25 °C in 0,5 %iger Lösung in Methylenchlorid) Phosphorgehalt : 2,3 %.

Brandwidrigkeitswerte und mechanische Prüfwerte des aromatischen Polyesterphosphonats gemäß Beispiel 1.

| Prüfung | Prüfnorm | Prüfwert |
|---|---|---|
| $O_2$-Index | ASTM-D 2863-7o | 54 % |
| | | VO (1/16") |
| | | Nachbrennzeit: |
| | | 0-1 sec |
| Vicat B | DIN 53 46o | 16o °C |
| Schlagzähigkeit $a_n$ | DIN 53 453 | ungebrochen |
| Kerbschlagzähigkeit $a_k$ | DIN 53 453 | 3-4 |
| Kugeldruckhärte HK | DIN 53 456 | 125 MPa |
| Biege-E-Modul | DIN 53 457 | 2100 MPa |
| Biegefestigkeit $_B$ | DIN 53 457 | 1o9 MPa |
| Zug-E-Modul | DIN 53 457 | 25oo MPa |
| Streckfestigkeit $_S$ | DIN 53 455 (1968) | 64 MPa |
| Streckdehnung $_S$ | DIN 53 455 | 8,8 % |
| Reißfestigkeit $_R$ | DIN 53 455 | 58 MPa |
| Reißdehnung $_R$ | DIN 53 455 | 22 % |

Beispiel 2

1 801 g (5,663 Mol) Iso-/Terephthalsäurediphenylestergemisch (1 : 1),
247,2 g (0,997 Mol) Methylphosphonsäurediphenylester,
1,4 g ($0,429 \cdot 10^{-2}$ Mol) Triphenylphosphat,
1 505 g (6,600 Mol) Bisphenol A und
0,1 g ($0,862 \cdot 10^{-3}$ Mol) Natriumphenolat

werden analog der in Beispiel 1 geschilderten Verfahrensweise umgesetzt. Man erhält 1,4 kg eines Polyesterphosphonats, in dem Iso-/Terephthalat- und Phosphonat-Einheiten im molaren Verhältnis 85 : 15 vorliegen.

Analytische Daten :
$\bar{M}_n$ = 22 100
$\eta_{rel}$ = 1,302 (gemessen bei 25 °C in einer 0,5 %igen Lösung in Methylenchlorid)
Phosphorgehalt 1,3 %
$O_2$-Index = 45 % (gemäß ASTM-D 2863-70)
Vicat B = 173 °C (gemäß DIN 53 460)

Beispiel 3

199,6 g (0,627 7 Mol) Iso-/Terephthalsäurediphenylester (1 : 1),
8,24 g (0,332 3 · $10^{-1}$ Mol) Methylphosphonsäurediphenylester,
0,14 g (0,429 4 · $10^{-3}$ Mol) Triphenylphosphat,
150,5 g (0,660 Mol) Bisphenol A und
10 mg (0,862 · $10^{-4}$ Mol) Natriumphenolat

werden analog der in Beispiel 1 geschilderten Verfahrensweise umgesetzt. Man erhält 140 g eines aromatischen Polyesterphosphonats, in dem Iso-Terephthalat- und Phosphonat-Einheiten im molaren Verhältnis 95 : 5 vorliegen.

Analytische Daten :
$\bar{M}_n = 23\,600$
$\eta_{rel} = 1,311$
Phosphorgehalt 0,44 %
$O_2$-Index = 39 % (gemäß ASTM-D 2863-70)
Vicat B = 179 °C (gemäß DIN 53 460)

Beispiel 4

10,5 g (0,33 · $10^{-1}$ Mol) Iso-/Terephthalsäurediphenylester,
156,7 g (0,631 9 Mol) Methylphosphonsäurediphenylester
0,14 g (0,429 4 · $10^{-3}$ Mol) Triphenylphosphat,
150,5 g (0,660 Mol) Bisphenol A und
10 mg (0,862 · $10^{-3}$ Mol) Natriumphenolat

werden analog der in Beispiel 1 geschilderten Verfahrensweise umgesetzt. Man erhält 140 g eines aromatischen Polyesterphosphonats, in dem Iso-/Terephthalat- und Phosponat-Einheiten im molaren Verhältnis 5 : 95 vorliegen.

Analytische Daten :
$\bar{M}_n = 19\,700$
$\eta_{rel} = 1,298$
Phosphorgehalt 10,0 %
$O_2$-Index = 67 % (gemäß ASTM-D 2863-70)
Vicat B = 135 °C (gemäß DIN 53 460)

**Patentansprüche**

1. Halogenfreie Polyesterphosphonate mit einem mittleren Molekulärgewicht $\bar{M}_n$ von 11 000 bis 200 000, dadurch gekennzeichnet, daß sie

A. 5-95, vorzugsweise 10 bis 60 Mol-% wiederkehrende Einheiten der Struktur

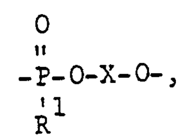

B. 95-5, vorzugsweise 90-40 Mol-% wiederkehrende Einheiten der Struktur

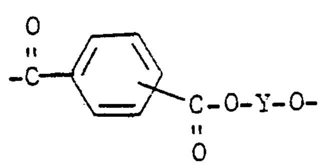

wobei sich die Molprozente A + B auf 100 ergänzen, und

C. an Phosphor gebundene Endgruppen

—O—X—O—E oder 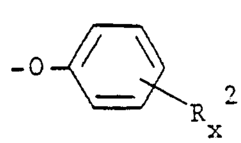

und an Sauerstoff gebundene Endgruppen

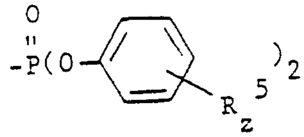

oder E enthalten, wobei X, Y

Phenylen 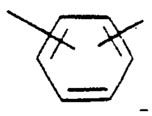

Biphenylen 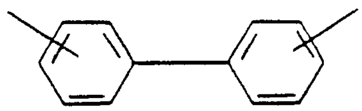

$C_1$-$C_4$-Alkylenbisphenylen 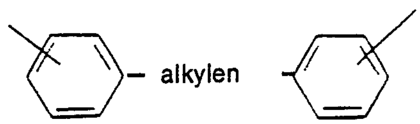

$C_5$-$C_{12}$-Cycloalkylenbisphenylen 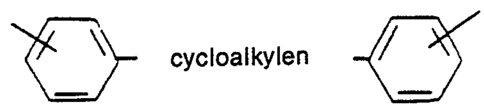

Thiobisphenylen 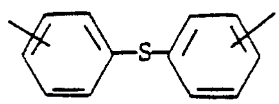

Oxibisphenylen 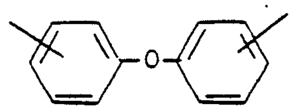

Sulfonylbisphenylen 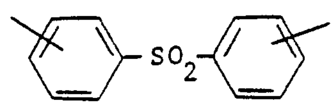

Carbonylbisphenylen 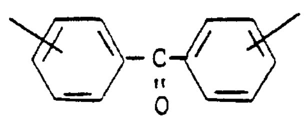

Naphthylen 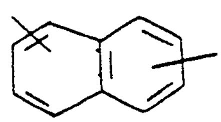 ,

wobei jeder Phenylkern unsubstituiert oder durch 1-4 $C_1$-$C_4$-Alkylgruppen substituiert sein kann und der naphthylenkern unsubstituiert oder durch 1-6 der genannten Gruppen substituiert sein kann,

—H,E 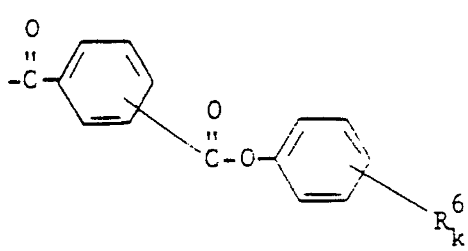 oder 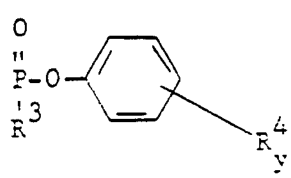 ,

$R^1$, $R^3$ Alkylreste mit 1-12 C-Atomen, Alkenylreste mit 2-12 C-Atomen, Cycloalkyl-, Cycloalkenyl-, Aryl-, Aralkyl- oder Aralkenylreste mit 6-30 C-Atomen, wobei die jeweilige Arylgruppe unsubstituiert oder durch 1-5 $C_1$-$C_4$-Alkylreste substituiert sein kann

$R^2$, $R^4$, $R^5$, $R^6$ $C_1$-$C_4$-Alkylgruppen und

k, x, y, z Null oder eine ganze Zahl von 1 bis 5

bedeuten.

2. Polyesterphosphonate nach Anspruch 1, dadurch gekennzeichnet, daß sie mittlere Molekulargewichte $\bar{M}_n$ von 12 000 bis 80 000 besitzen.

3. Polyesterphosphonate nach Ansprüchen 1 und 2, dadurch gekennzeichnet, daß $R^1$ bzw. $R^3$ Methyl oder Phenyl bedeutet.

4. Polyesterphosphonate nach Ansprüchen 1-3, dadurch gekennzeichnet, daß sie Iso- und Terephthalateinheiten im Verhältnis 1 : 10 bis 10 : 1 enthalten.

5. Verwendung der Polyesterphosphonate nach Ansprüchen 1-4 zur Herstellung thermoplasticher Formkörper.

**Claims**

1. Halogen-free polyester phosphonates having an average molecular weight $\bar{M}_n$ of from 11,000 to 200,000, characterised in that they contain

A. 5-95, preferably 10-60 mol-% of recurrent units of the structure

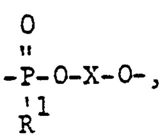

B. 95-5, preferably 90-40 mol-% of recurrent units of the structure

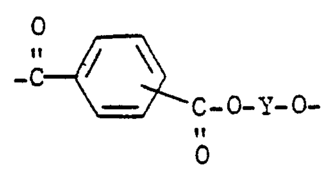

the molar percentages A + B adding up to 100, and

C. end groups linked to phosphorus :

—O—X—O—E or 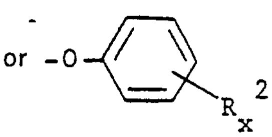

and end groups linked to oxygen :

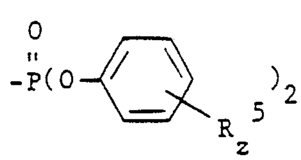

or E, in which X and Y denote

phenylene 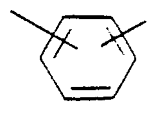

biphenylene 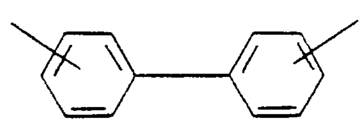

$C_1$-$C_4$-alkylene-bisphenylene 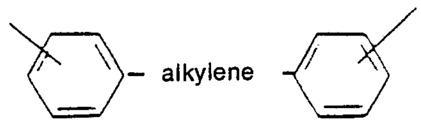

$C_5$-$C_{12}$-cycloalkylene-bisphenylene 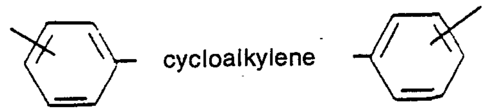

Thiobisphenylene 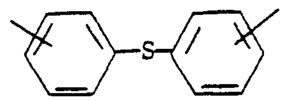

oxybisphenylene 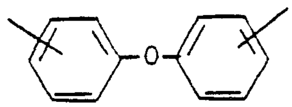

sulphonyl-bisphenylene 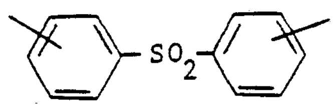

carbonyl-bisphenylene 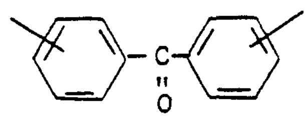

naphthylene 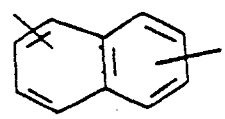,

in which each phenyl nucleus may be unsubstituted or substituted by 1-4 $C_1$-$C_4$-alkyl groups and the naphthylene nucleus may be unsubstituted or substituted by 1-6 of the stated groups,

E denotes —H, 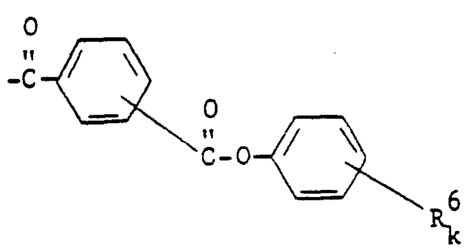 or 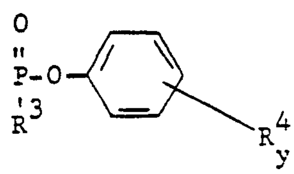,

$R^1$ and $R^3$ denote alkyl groups with 1-12 carbon atoms, alkenyl groups with 2-12 carbon atoms, cycloalkyl, cycloalkenyl, aryl, aralkyl or aralkenyl groups with 6-30 carbon atoms, in which the aryl groups may be unsubstituted or substituted by 1-5 $C_1$-$C_4$-alkyl groups,

$R^2$, $R^4$, $R^5$ and $R^6$ denote $C_1$-$C_4$-alkyl groups and

k, x, y and z denote zero or an integer from 1 to 5.

2. Polyesterphosphonates according to claim 1, characterised in that they have average molecular weights $\bar{M}_n$ of from 12,000 to 80,000.

3. Polyester phosphonates according to claims 1 and 2, characterised in that $R^1$ and $R^3$ denote methyl or phenyl.

4. Polyester phosphonates according to claims 1 to 3, characterised in that they contain isophthalate and terephthalate units in ratios of from 1 : 10 to 10 : 1.

5. Use of the polyester phosphonates according to claims 1 to 4 for the preparation of thermoplastic moulded bodies.

**Revendications**

1. Polyesterphosphonates exempts d'halogène ayant un poids moléculaire moyen $\bar{M}_n$ de 11 000 à 200 000, caractérisés en ce qu'ils contiennent

A. 5-95, de préférence 10 à 60 moles % de motifs récurrents de structure

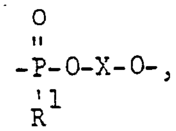

B. 95-5, de préférence 90-40 moles % de motifs récurrents de structure

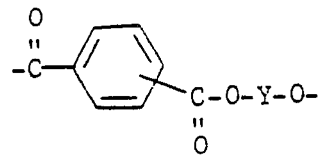

la somme A + B étant de 100 moles %, et

C. des groupes terminaux

—O—X—O—E ou 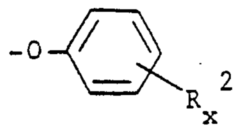

liés au phosphore, et des groupes terminaux

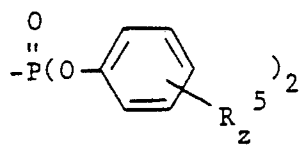

ou E liés à l'oxygène, où X, Y représentent des groupes

phénylène 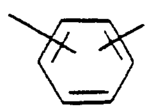

biphénylène 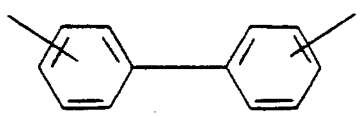

(alkylène en $C_1$-$C_4$) bisphénylène 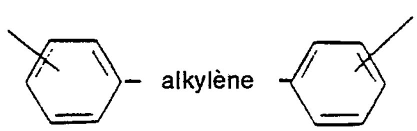

(cycloalkylène en $C_5$-$C_{12}$) bisphénylène 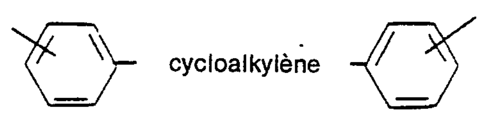

thiobisphénylène 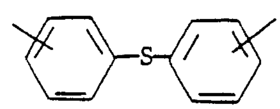

oxybisphénylène 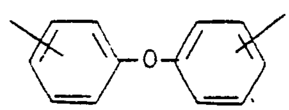

sulfonylbisphénylène 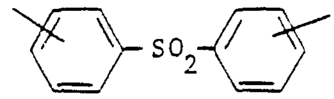

carbonylbisphénylène 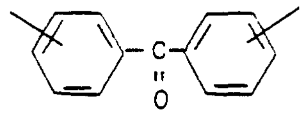

naphtylène 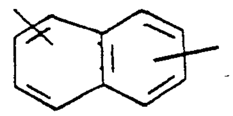 ,

chaque noyau phényle pouvant être non substitué ou substitué par 1 à 4 groupes alkyles en $C_1$-$C_4$ et le noyau naphtylène pouvant être non substitué ou substitué par 1 à 6 des groupes mentionnés,

E représente

—H, ou le groupe 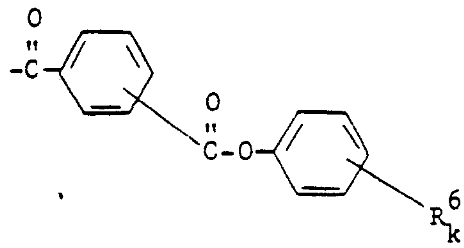 ou 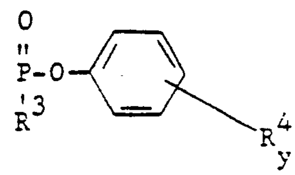 ,

$R^1$, $R^3$ représentent des restes alkyles en $C_1$-$C_{12}$, alcényles en $C_2$-$C_{12}$, cycloalkyles, cycloalcényles, aryles, arylalkyles ou arylalcényles en $C_6$-$C_{30}$, chaque groupe aryle pouvant être non substitué ou substitué par 1 à 5 restes alkyles en $C_1$-$C_4$,

$R^2$, $R^4$, $R^5$, $R^6$ représentent des groupes alkyles en $C_1$-$C_4$ et

k, x, y, z représentent zéro ou un nombre entier de 1 à 5.

2. Polyesterphosphonates selon la revendication 1, caractérisés en ce qu'ils possèdent des poids moléculaires moyens $\bar{M}_n$ de 12 000 à 80 000.

3. Polyesterphosphonates selon les revendications 1 et 2, caractérisés en ce que $R^1$ ou $R^3$ représente un groupe méthyle ou phényle.

4. Polyesterphosphonates selon les revendications 1-3, caractérisés en ce qu'ils contiennent des motifs iso- et téréphtalates dans un rapport de 1 : 10 à 10 : 1.

5. Utilisation des polyesterphosphonates selon les revendications 1-4 pour la fabrication de pièces moulées thermoplastiques.